# EUROPÄISCHE PATENTANMELDUNG

(11) **EP 0 606 854 A2**
(43) Veröffentlichungstag der Anmeldung: **20.07.1994**
(21) Anmeldenummer: 94100168.7
(22) Anmeldetag: 07.01.1994
(51) Int. Cl.: H04B 1/38, B60R 11/02

(54) **Funkgerät**

(30) Priorität: 09.01.1993 DE 4300433
(71) Anmelder: Philips Patentverwaltung GmbH, 22335 Hamburg (DE); Philips Electronics N.V., 5621 BA Eindhoven (NL)
(72) Erfinder: Walters, Eckhard, c/o Philips Patentverwaltung, D-20097 Hamburg (DE)
(74) Vertreter: Volmer, Georg, Dipl.-Ing.

(57) **Zusammenfassung**

Die Erfindung betrifft ein Funkgerät mit mindestens einem Lautsprecher (5) und mindestens einem Mikrophon (2, 3, 4), die in eine Sonnenblendenvorrichtung integriert sind. Es wird vorgeschlagen, die in die Sonnenblende (6) eingebauten Lautsprecher (5) so in der Sonnenblende anzuordnen, daß sie aus der dem Sprecher/ Hörer (11) zugewandten Schmalseite der Sonnenblende (6) abstrahlen. Weiterhin werden die Mikrophone (2, 3, 4) auf der dem Sprecher/ Hörer (11) abgewandten Schmalseite der Sonnenblende (6) angebracht. Ein solches Funkgerät ist für einen mobilen Einsatz in Fahrzeugen insbesondere als Freisprecheinrichtung geeignet.

## Beschreibung

Die Erfindung bezieht sich auf ein Funkgerät mit mindestens einem Lautsprecher und mindestens einem Mikrophon, die in eine Sonnenblendenvorrichtung integriert sind.

Aus der deutschen Offenlegungsschrift DE 30 09 483 A1 ist ein Funksprechgerät bekannt, das ein abgetrenntes Bedienteil aufweist. Es istfürden mobilen Einsatz in Fahrzeugen vorgesehen. Das Bedienteil des Funksprechgerätes enthält neben anderen Bedienungselementen ein Mikrophon und einen Lautsprecher. Dieses Bedienteil wird in die Sonnenblende eines Fahrzeuges eingebaut. Der Einsatz des Funksprechgerätes bzw. des Bedienteiles ist jedoch nur im heruntergeklappten Zustand der Sonnenblende möglich. Im hochgeklappten Zustand der Sonnenblende ist das Bedienteil mit seinen Bedienungselementen für den Fahrer des Fahrzeuges, dem Sprecher bzw. Hörer nicht erreichbar. Außerdem werden dann der Lautsprecher und das Mikrophon durch die Sonnenblende vom Fahrer akustisch abgeschirmt.

Der Erfindung liegt deshalb die Aufgabe zugrunde, ein Funkgerät für den mobilen Einsatz in Fahrzeugen, von dem einzelne Elemente in eine Sonnenblende des Fahrzeuges integriert sind, insoweit zu verbessern, daß eine Benutzung des Funkgerätes in allen Positionen der Sonnenblende möglich ist.

Diese Aufgabe wird dadurch gelöst, daß die in die Sonnenblende eingebauten Lautsprecher aus der dem Sprecher/ Hörer zugewandten Schmalseite der Sonnenblende abstrahlen und daß die Mikrophone auf der dem Sprecher/ Hörer abgewandten Schmalseite der Sonnenblende angebracht sind.

Eine Sonnenblende besitzt zwei großflächige Flachseiten und vier kleinflächige Schmalseiten. Aus dem Stand der Technik ist bekannt, einen Lautsprecher bzw. ein Mikrophon eines Funksprechgerätes so in eine Sonnenblende einzubauen, daß die Hauptabstrahl- bzw. Haupteinstrahlrichtung senkrecht auf den beiden Flachseiten der Sonnenblende steht. Bei einer solchen Anordnung ist entweder bei hochgeklappter oder heruntergeklappter Sonnenblende eine akustische Abschirmung des Lautsprechers bzw. des Mikrophons von dem im Fahrzeug befindlichen Sprecher/ Hörer durch die Sonnenblende vorhanden. In solchen Positionen der Sonnenblende, wo diese eine akustische Abschirmung der Lautsprechers bzw. der Mikrophone vom Sprecher/ Hörer bewirkt, ist nur eine unbefriedigende Gesprächsqualität erreichbar. Bei der erfindungsgemäßen Anordnung sind ein oder mehrere Lautsprecher so in die Sonnenblende integriert, daß diese aus der dem Sprecher/ Hörer zugewandten Schmalseite der Sonnenblende abstrahlen. Insbesondere flache Piezo-Folienlautsprecher sind für diesen Einsatz geeignet. Lautsprecher, die auf diese Art und Weise in eine Sonnenblende eingebaut werden, können in jeder Stellung der Sonnenblende ungehindert in den Fahrgastraum des Fahrzeugs abstrahlen. Weiterhin ist vorgesehen, ein oder mehrere Mikrophone auf der gegenüberliegenden Schmalseite der Sonnenblende anzuordnen. So ist sichergestellt, daß die Rückkopplung von einem Lautsprecher in ein Mikrophon gering ist. Dies ist besonders vorteilhaft beim Einsatz der Anordnung in einer Freisprecheinrichtung. Die Mikrophone können an der Sonnenblende, an der Sonnenblendenhalterung oder auch an einem gesonderten Befestigungsteil angebracht werden. Der Einsatz mehrerer Mikrophone ist vorteilhaft, weil es so möglich wird, das Funkgerät mit einer Störschallunterdrückung auszurüsten. Je größer die Anzahl der eingesetzten Mikrophone ist, desto effektiver ist eine Störschallunterdrückung.

Eine Ausgestaltung der Erfindung ist dadurch gekennzeichnet, daß die Mikrophone an einem mit der Sonnenblende gekoppeltem Befestigungsteil angebracht sind.

Im Regelfall haben die Mikrophone, die auf der dem Sprecher/ Hörer abgewandten Schmalseite der Sonnenblende angebracht ist, nur einen sehr geringen Abstand von der Sonnenblende. Die Haupteinstrahlrichtung der Mikrophone schneiden in diesem Fall die Sonnenblende in einem weiten Schwenkbereich der Sonnenblende. Die daraus resultierende Abschirmwirkung der Sonnenblende behindert die Schalleinstrahlung in die Mikrophone. Um die Stellung der Mikrophone der Stellung der Sonnenblende anzupassen, ist es vorteilhaft, diese an einem mit der Sonnenblende gekoppelten Befestigungsteil anzubringen. Beim Schwenken der Sonnenblende kann so die Stellung der Mikrophone angepaßtwerden. Die Abschirmwirkung der Sonnenblende wird reduziert und die akustische Kopplung der Mikrophone an den Sprecher/ Hörer wird auf diese Weise verbessert.

Eine andere Weiterbildung der Erfindung ist dadurch gekennzeichnet, daß das Befestigungsteil drehbar gelagert ist und durch die Kopplung von Sonnenblende und Befestigungsteil das Befestigungsteil eine zur Schwenkrichtung der Sonnenblende entgegensetzte Drehbewegung ausführt.

Die Stellungen der Sonnenblende lassen sich grob in drei Winkelbereichen zusammenfassen: Die Sonnenblende kann eine nach oben, auf den Sprecher/ Hörer oder nach unten ausgerichtete Stellung einnehmen. Ist die Sonnenblende nach oben ausgerichtet, also hochgeklappt, müssen die Mikrophone eine nach unten ausgerichtete Haupteinstrahlrichtung aufweisen, damit eine akustische Abschirmung des Sprechers/Hörers vom Mikrophon durch die Sonnenblende vermieden wird. Befindet sich die Sonnenblende in einem unteren Winkelbereich, muß die Haupteinstrahlrichtung der Mikrophone nach oben ausgerichtet sein. Die Haupteinstrahlrichtung der Mikrophone liegt in diesem Fall oberhalb des Winkels, den die Haupteinstrahlrichtung der Mikrophone bei direkter Ausrichtung auf den Hörer/ Sprecher einnimmt. Um die Mikrophone in eine der Stellung der Sonnenblende angepaßte Richtung nachführen zu können, ist es vorteilhaft, das Befestigungsteil, auf dem die Mikrophone angebracht sind, drehbar zu lagern. Ist die Kopplung von Befestigungsteil und Sonnenblende so beschaffen, daß das Schwenken der Sonnenblende und die Drehbewegung des Befestigungsteil mit den Mikrophonen in entgegengesetzte Richtungen erfolgt, so kann sichergestellt werden, daß bei hoch- und heruntergeklappter Sonnenblende die Mikrophone nur wenig durch die Sonnenblende abgeschirmt werden.

Eine andere Weiterbildung der Erfindung ist dadurch gekennzeichnet, daß das Befestigungsteil beim Schwenken der Sonnenblende einen Winkelbereich, in dem die Haupteinstrahlrichtung der Mikrophone die Sonnenblende schneidet, mit einer schnappartigen Bewegung durchläuft.

Sind sowohl die Sonnenblende als auch die Haupteinstrahlrichtung der Mikrophone auf den Sprecher/ Hörer ausgerichtet, liegt die Haupteinstrahlrichtung der Mikrophone in einer Ebene mit der Sonnenblende. Da die Mikrophone normalerweise nah an der Sonnenblende angebracht sind, würde sich in einer solchen Stellung eine hohe Abschirmwirkung der Mikrophone vom Sprecher/ Hörer durch die Sonnenblende ergeben. Ein verschlechterter Empfang der Mikrophone wäre die Folge. Diese ungünstige Stellung der Mikrophone wird dadurch vermieden, daß diese diesen Winkelbereich durch eine schnappartige Bewegung überwinden. Durchfährt die Sonnenblende den Winkel, bei dem sie auf den Sprecher/ Hörerausgerichtet ist, von unten nach oben, soführtdas Befestigungsteil mit den Mikrophonen eine schnappartige Bewegung so aus, daß die Haupteinstrahlrichtung der Mikrophone in einem unteren Winkelbereich gedreht wird. Durchfährt die Sonnenblende die Position, in der sie auf den Sprecher/ Hörer ausgerichtet ist, von oben nach unten, so werden die Mikrophone bzw. deren Haupteinstrahlrichtung in eine obere Winkelposition bewegt. Eine geeignete obere oder untere Position der Mikrophone ist dadurch gegeben, daß die Haupteinstrahlrichtung der Mikrophone die Sonnenblende gerade nicht mehr schneidet. Das Auslösen der schnappartigen Bewegung des Befestigungsteils mit den Mikrophonen erfolgt vorteilhaft dann, wenn die Sonnenblende durch eine Ebene bewegt wird, in der sie auf den Sprecher/ Hörer ausgerichtet ist. Auf diese Art und Weise wird bei einer mittleren Stellung der Sonnenblende die Abschirmwirkung der Sonnenblende minimiert. Können die Grenzen des Winkelbereichs, den die Mikrophone mit einer schnappartigen Bewegung überwinden, so gewählt werden, daß selbst bei ganz heruntergeklappter oder ganz heraufgeklappter Sonnenblende die Abschirmung der Mikrophone durch die Sonnenblende gering ist, so reichtdie beschriebene technische Maßnahme aus, im gesamten Schwenkbereich der Sonnenblende eine befriedigende akustische Kopplung der Mikrophone mit dem Sprecher/ Hörer zu erreichen.

Eine weitere Ausbildung der Erfindung ist dadurch gekennzeichnet, daß die Sonnenblende und das die Mikrophone tragende Befestigungsteil durch ein mechanisches Getriebe gekoppelt sind.

Eine Kopplung von Sonnenblende und Befestigungsteil, an dem ein oder mehrere Mikrophone angebracht sind, ist prinzipiell sowohl auf elektrischem als auch auf mechanischem Wege realisierbar. Eine elektrische Realisierung wäre z. B. eine Kopplung mit Hilfe eines Elektromotors, der von einer elektronischen Schaltung gesteuert wird, wobei die elektronische Schaltung die Stellungen von Sonnenblende und Befestigungsteil kontrolliert. Ein mechanisches Getriebe ist vorteilhafterweise wesentlich einfacher realisierbar. So läßt sich eine gegenläufige Bewegung von Sonnenblende und Befestigungsteil beispielsweise sehr einfach durch ein Getriebe mit zwei Zahnrädern realisieren.

Eine weitere Ausbildung der Erfindung ist dadurch gekennzeichnet, daß das Befestigungsteil eine Stange ist.

Wie oben beschrieben, sind die Mikrophone erfindungsgemäß auf der dem Sprecher/ Hörer abgewandten Schmalseite der Sonnenblende anzubringen. Das Befestigungsteil muß sowohl alle Mikrophone tragen, als auch zur Kopplung der Mikrophone mit der Sonnenblende beitragen. Das Befestigungsteil läßt sich auf einfache Weise durch eine Stange realisieren. An dieser sind die Mikrophone leicht beispielsweise durch eine Klemm- oder Schraubverbindung zu befestigen.

Ausführungsbeispiele der Erfindung werden an nachstehenden Figuren näher erläutert.

Es zeigen:
Fig. 1 ein Funkgerät mit einem Lautsprecher und drei Mikrophonen,
Fig. 2 eine Sonnenblendenvorrichtung mit integriertem Lautsprecher und integrierten Mikrophonen,
Figuren 3 und 4 zwei mögliche Stellungen der Sonnenblende und der Mikrophone und
Fig. 5 eine Kopplungsmöglichkeit von Sonnenblende und einem die Mikrophone tragenden Befestigungstei I

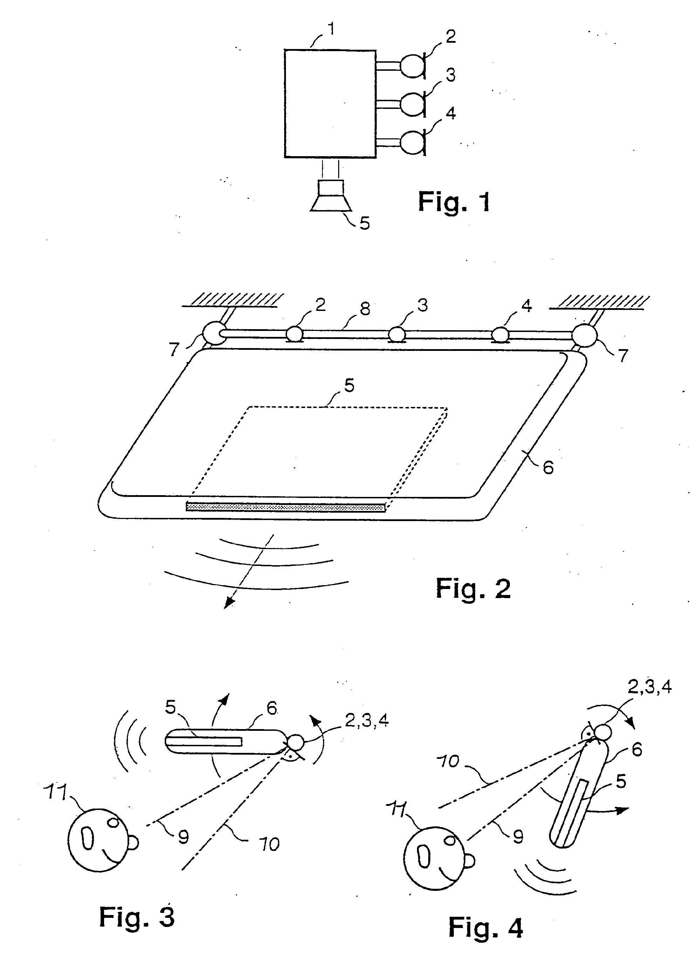

Die in Fig. 1 dargestellte Skizze beschreibt ein Funkgerät mit einem Transceiver 1, drei Mikrophonen 2, 3, 4 und einem Lautsprecher 5. Die Mikrophone und der Lautsprecher sind außerhalb des Transceivergehäuses angeordnet. Ein solches Funkgerät ist für den Einsatz in Fahrzeugen vorgesehen. Durch die Verwendung von mehreren Mikrophonen ist die Realisierung einer an sich bekannten Störschallunterdrückung möglich. So kann der störende Einfluß von Wind- und Motorgeräuschen vermindert werden. Der Transceiver 1 kann z. B. im Amaturenbrett oder zwischen den Fahrersitzen eingebaut werden. Ein vorteilhafter Einbauplatz für die Mikrophone 2, 3 und 4 und für den Lautsprecher 5 ist die Sonnenblende. Auf diese Weise wird eine gute akustische Kopplung der Mikrophone mit dem Fahrer des Fahrzeuges, d.h. des Sprechers/ Hörers, erreicht. Außerdem ist dieser Einbauplatz normalerweise nicht schon von weiteren technischen Vorrichtungen besetzt.

Fig. 2 zeigt eine Sonnenblendenanordnung mit integriertem Lautsprecher 5 und integrierten Mikrophonen 2, 3 und 4. Der Lautsprecher 5 ist so in eine Sonnenblende 6 eingebaut, das er aus der einem Sprecher/ Hörer zugewandten Schmalseite der Sonnenblende 6 abstrahlt. Hier ist als Realisierung des Lautsprechers 5 ein Flachlautsprecher, beispielsweise ein Piezo-Folienlautsprecher, angedeutet. Die Sonnenblende 6 ist über ein Getriebe 7 mit einem als Stange ausgeführtem Befestigungsteil 8, das die Mikrophone 2, 3 und 4 trägt, gekoppelt. Die Sonnenblendenanordnung ist oberhalb der Windschutzscheibe im Innenraum eines Fahrzeuges befestigt.

Das Getriebe 7 koppelt die Sonnenblende 6 bzw. den Lautsprecher 5 mit den Mikrophonen 2, 3 und 4. Eine Schwenkbewegung der Sonnenblende 6 kann mit Hilfe dieses Getriebes in eine Drehbewegung der auf dem Befestigungsteil 8 angeordneten Mikrophone 2, 3 und 4 umgesetzt werden.

Die Figuren 3 und 4 zeigen zwei mögliche Stellungen der Sonnenblende 6 und der Mikrophone 2, 3 und 4. In den beiden Figuren ist eine Seitenansicht der Sonnenblende und der Mikrophone als auch der Kopf 11 eines Sprechers/Hörers dargestellt. Eine Ebene 10 stellt die Haupteinstrahlrichtung der Mikrophone 2, 3 und 4 dar. Eine Symmetrieebene 9 schneidet die Drehachse der Mikrophone 2, 3 und 4, um die auch die Sonnenblende 6 mit integriertem Lautsprecher 5 geschwenkt wird, und den Kopf 11 des Sprechers/ Hörers.

In Fig. 3 ist die Sonnenblende 6 in hochgeklappter Stellung gezeichnet. Die Sonnenblende 6 befindet sich oberhalb der Symmetrieebene 9. Die Haupteinstrahlrichtung 10 der Mikrophone 2, 3, und 4 befindet sich unterhalb der Symmetrieebene 9. Da die Sonnenblende und die Mikrophone überein Getriebe miteinander gekoppelt sind, werden beim Hochschwenken der Sonnenblende 6 die Mikrophone 2, 3 und 4 nach unten gedreht. Diese Schwenk- bzw. Drehbewegungen sind in der Skizze angedeutet. Die Haupteinstrahlrichtung 10 der Mikrophone 2, 3 und 4 schneidet die Sonnenblende 6 gerade nicht mehr. Somit sind die Mikrophone 2, 3 und 4 durch die Sonnenblende 6 kaum vom Sprecher/ Hörer akustisch abgeschirmt. Die Schallabstrahlung des Lautsprechers 5 ist ebenfalls angedeutet. Man erkennt, daß die akustische Rückkopplung in die Mikrophone 2, 3 und 4 auf ein Minimum reduziert ist. Dies ist insbesondere beim Einsatz des Funkgerätes als Freisprecheinrichtung vorteilhaft.

In Fig. 4 ist die Sonnenblende 6 in einer unteren heruntergeklappten Position dargestellt. Die Sonnenblende 6 befindet sich unterhalb der Symmetrieebene 9. In dieser Stellung der Sonnenblende 6 befindet sich die Haupteinstrahlrichtung 10 der Mikrophone 2, 3 und 4 oberhalb der Symmetrieebene 9. Das Schwenken der Sonnenblende 6 mit integriertem Lautsprecher 5 nach unten ist ebenso wie das gleichzeitige entgegengerichtete Drehen der Mikrophone 2, 3 und 4 angedeutet. Die Haupteinstrahlrichtung 10 der Mikrophone 2, 3 und 4 schneidet im dargestellten Fall die Sonnenblende 6 nicht. Es ergibt sich eine optimierte akustische Kopplung der Mikrophone 2, 3 und 4 des Lautsprechers 5 an den Sprecher/ Hörer 11.

Die in Figuren 3 und 4 angedeutete Drehbewegung der Mikrophone 2, 3 und 4 kann sowohl eine kontinuierliche als auch eine schnappartige Bewegung darstellen. Durch eine schnappartige Bewegung der Mikrophone 2, 3 und 4 lassen sich Stellungen der Mikrophone 2,3 und 4 und der Sonnenblende 6 vermeiden, in denen die Haupteinstrahlrichtung 10 der Mikrophone die Sonnenblende 6 schneidet. Diese Stellungen treten insbesondere dann auf, wenn die Sonnenblende 6 auf den Kopf 11 des Sprechers/ Hörers ausgerichtet ist. Das Auslösen der schnappartigen Bewegung erfolgt auf vorteilhafte Weise dann, wenn die Sonnenblende 6 die Symmetriebene 9 durchfährt. Durchfährt die Sonnenblende 6 die Symmetrieebene 9 von oben nach unten, so werden die Mikrophone 2, 3 und 4 in einer schnappartigen Bewegung so gedreht, daß die Haupteinstrahlrichtung 10 von einer Position unterhalb der Symmetrieebene 9 in einer Position oberhalb der Symmetrieebene 9 bewegt wird. Das Schwenken der Sonnenblende 6 aus einer Position unterhalb der Symmetrieebene 9 nach oben und die damit verbundene entgegengerichtete Drehbewegung der Mikrophone erfolgt analog. Die schnappartige Bewegung der Sonnenblende 6 wird ebenfalls dann ausgelöst, wenn die Sonnenblende 6 die Symmetrieebene 9 durchfährt.

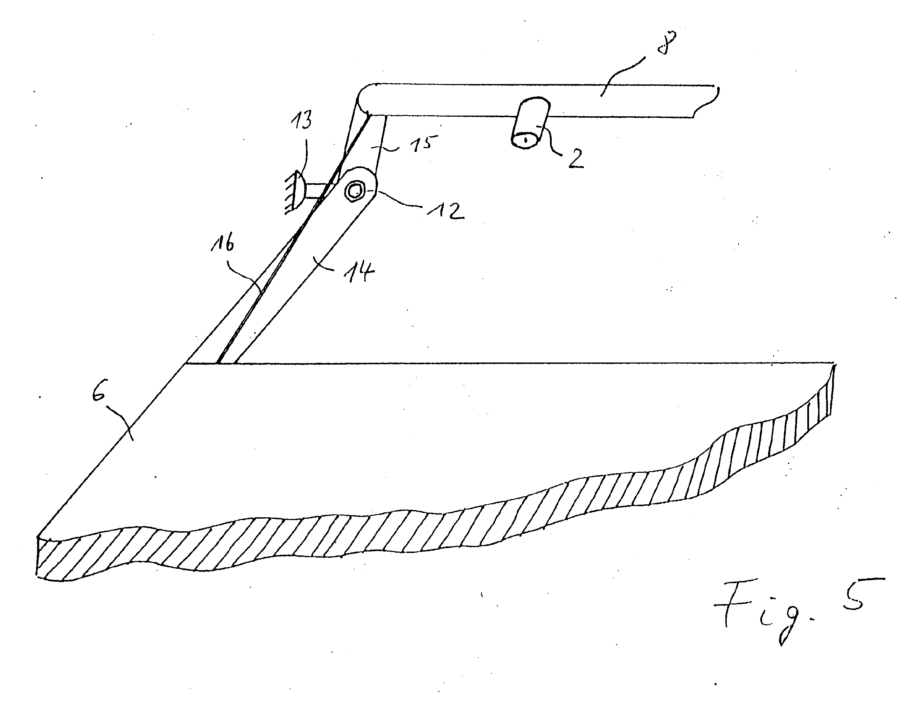

In Fig. 5 ist zur Beschreibung einer besonderen Kopplungsmöglichkeitzwischen Sonnenblende 6 und Befestigungsteil 8 ein Teil der zugehörigen Sonnenblendenvorrichtung dargestellt. Es ist ein fest beispielsweise an der Fahrzeugkarosserie 13 befestigtes Lager 12 vorgesehen. Im Lager 12 ist einerseits eine Befestigungsstange 14 der Sonnenblende 6 und andererseits eine Befestigungsstange 15 des Befestigungsteils 8 drehbar gelagert. Die Befestigungsstangen 14 und 15 sind mit der Sonnenblende 6 bzw. dem Befestigungsteil 8 fest verbunden. Ein elastisches Koppelelement 16, beispielsweise ein Gummiband oder eine Zugfeder, ist am Befestigungsteil 8 und an der Sonnenblende 6 befestigt und vorgespannt. Wird die Sonnenblende 6 aus der dargestellten oberen Position wie in Fig. 4 nach unten gedreht, so führt das Befestigungsteil 8 eine schnappartige Drehbewegung nach unten aus, wenn das elastische Koppelelement 16 die Verlängerung der Drehachse des Lagers 12 schneidet und die Richtung des durch das Koppelelement 16 erzeugten und auf das Befestigungsteil einwirkenden Drehmoments umgekehrt wird. Dabei dreht sich wie gewünscht die Haupteinstrahlrichtung der Mikrophone 2, 3 und 4 von unten nach oben. Die Kopplung von Sonnenblende 6 und Befestigungsteil 8 auf der gegenüberliegenden Seite ist in gleicher Weise ausgeführt.

## Patentansprüche

1. Funkgerät mit mindestens einem Lautsprecher (5) und mindestens einem Mikrophon (2, 3, 4), die in eine Sonnenblendenvorrichtung integriert sind,
dadurch gekennzeichnet,
daß die in die Sonnenblende eingebauten Lautsprecher (5) aus der dem Sprecher/ Hörer (11) zugewandten Schmalseite der Sonnenblende (6) abstrahlen und
daß die Mikrophone (2, 3, 4) auf der dem Sprecher/ Hörer (11) abgewandten Schmalseite der Sonnenblende (6) angebracht sind.

2. Funkgerät nach Anspruch 1, dadurch gekennzeichnet,
daß die Mikrophone (2, 3, 4) an einem mit der Sonnenblende (6) gekoppelten Befestigungsteil (8) angebracht sind.

3. Funkgerät nach Anspruch 2, dadurch gekennzeichnet,
daß das Befestigungsteil (8) drehbar gelagert ist und daß durch die Kopplung von Sonnenblende (6) und Befestigungsteil (8) das Befestigungsteil eine zur Schwenkrichtung der Sonnenblende (6) entgegengesetzte Drehbewegung ausführt.

4. Funkgerät nach Anspruch 2 oder 3, dadurch gekennzeichnet,
daß das Befestigungsteil (8) beim Schwenken der Sonnenblende (6) einen Winkelbereich, in dem die Haupteinstrahlrichtung (10) der Mikrophone (2, 3, 4) die Sonnenblende (6) schneidet, mit einer schnappartigen Bewegung durchläuft.

5. Funkgerät nach Anspruch 2 bis 4, dadurch gekennzeichnet,
daß die Sonnenblende (6) und das die Mikrophone (2, 3, 4) tragende Befestigungsteil (8) durch ein mechanisches Getriebe (7) gekoppelt sind.

6. Funkgerät nach Anspruch 2 bis 5, dadurch gekennzeichnet,
daß das Befestigungsteil (8) eine Stange ist.
